(19) Europäisches Patentamt
European Patent Office
Office européen des brevets

(11) **EP 4 760 200 A1**

(12) **EUROPEAN PATENT APPLICATION**

(43) Date of publication:
17.06.2026 Bulletin 2026/25

(51) International Patent Classification (IPC):
*G01B 11/02* (2006.01)    *G01B 11/25* (2006.01)
*G01N 21/88* (2006.01)

(21) Application number: 25212529.9

(22) Date of filing: 30.10.2025

(52) Cooperative Patent Classification (CPC):
G01B 11/026; G01B 11/25; G01N 21/8806

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 16.12.2024 JP 2024220310
03.09.2025 JP 2025146189

(71) Applicant: Ricoh Company, Ltd.
Tokyo 143-8555 (JP)

(72) Inventors:
• **MASUDA, Koji**
**Tokyo, 143-8555 (JP)**
• **HIRAKAWA, Makoto**
**Tokyo, 143-8555 (JP)**
• **HINO, Makoto**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **MEASURING APPARATUS AND MEASURING METHOD**

(57) A measuring apparatus (1) includes a housing (10), an illumination unit (11), a light receiving unit (12), an actuator (16), a calculation unit (22), and a control unit (23). The distance measuring unit (21) controls the illumination unit and the light receiving unit to measure a measurement distance, in a perpendicular direction perpendicular to the first face, between the first face of the object and a second face of the housing facing the first face of the object. The calculation unit (22) determines a moving distance and a moving direction of the light receiving unit based on the illumination angle between an optical axis of the reflection light and a perpendicular line in the perpendicular direction and an amount of change in the measurement distance in the perpendicular direction. The control unit (23) drives the actuator to move the light receiving unit by the moving distance in the moving direction.

FIG. 1

EP 4 760 200 A1

**Description**

BACKGROUND

Technical Field

The present disclosure relates to a measuring apparatus and a measuring method.

Related Art

An inspection apparatus that inspects, as a measurement object, a painted surface of a vehicle body for defects is known. Japanese Unexamined Patent Application Publication No. 2024-134409 discloses a vehicle body inspection apparatus including an illumination unit that illuminates surfaces of a vehicle body, an imaging unit that images the surfaces of the vehicle body, and a moving unit that moves at least one of the illumination unit, the imaging unit, and other components.

The vehicle body inspection apparatus of Japanese Unexamined Patent Application Publication No. 2024-134409 has a configuration in which the illumination unit and the imaging unit each move. The operations of the illumination unit and the imaging unit are not stable in some cases. Thus, the accuracy of measuring the measurement object may be insufficient.

SUMMARY

The present disclosure described herein provides a measuring apparatus that can increase the accuracy of measuring a measurement object.

According to one aspect of the present disclosure, a measuring apparatus includes a housing, an illumination unit fixed to the housing; a light receiving unit, an actuator, a distance measuring unit, a calculation unit, and a control unit. The illumination unit emits illumination light, in an optical-axis direction, to a first face of an object conveyed in a conveyance direction; and illuminates, the first face of the object at a first position and at an illumination angle, with the illumination light. The light receiving unit receives reflection light, specularly reflected from the first face of the object illuminated by the illumination unit. The actuator moves the light receiving unit. The distance measuring unit controls the illumination unit and the light receiving unit to measure a measurement distance, in a perpendicular direction perpendicular to the first face, between the first face of the object and a second face of the housing facing the first face of the object. The calculation unit determines a movement distance and a moving direction of the light receiving unit based on the illumination angle between an optical axis of the reflection light and a perpendicular line in the perpendicular direction; and an amount of change in the measurement distance in the perpendicular direction. The control unit drives the actuator to move the light receiving unit by the movement distance in the moving direction.

According to one aspect of the present disclosure, a measuring method includes: emitting, from an illumination unit fixed to a housing, illumination light, in an optical-axis direction, to a first face of an object conveyed in a conveyance direction; illuminating, the first face of the object at a first position and at an illumination angle, with the illumination light; receiving, by a light receiving unit, reflection light, specularly reflected from the first face of the object illuminated by the illumination unit; controlling the illumination unit and the light receiving unit to measure a measurement distance, in a perpendicular direction perpendicular to the first face, between the first face of the object and a second face of the housing facing the first face of the object; determining a movement distance and a moving direction of the light receiving unit based on the illumination angle between an optical axis of the reflection light and a perpendicular line in the perpendicular direction and an amount of change in the measurement distance in the perpendicular direction; and driving an actuator to move the light receiving unit by the movement distance in the moving direction.

According to one aspect of the present disclosure, the accuracy of measuring a measurement object can be increased.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram of a configuration of a measuring apparatus according to a first embodiment of the present disclosure;
FIG. 2 is diagram illustrating a configuration of an optical section according the first embodiment of the disclosure;

FIGS. 3A and 3B are diagrams illustrating the relation between the optical section of the measuring apparatus and a measurement object according to the first embodiment of the present disclosure;

FIGS. 4A, 4B, and 4C are diagrams illustrating an optical arrangement of the measuring apparatus according to the first embodiment of the present disclosure;

FIGS. 5A, 5B, 5C, and 5D are diagrams illustrating an illumination pattern formed on a second diffuser plate in the measuring apparatus according to the first embodiment of the present disclosure;

FIG. 6 is a block diagram illustrating a hardware configuration of a processing unit of the measuring apparatus according to the first embodiment of the present disclosure;

FIG. 7 is a block diagram illustrating a functional configuration of the measuring apparatus according to the first embodiment of the present disclosure;

FIGS. 8A and 8B are diagrams illustrating an operation of an optical section according to a comparative example;

FIGS. 9A and 9B are diagrams illustrating an operation of the optical section according to the first embodiment of the present disclosure;

FIG. 10 is a diagram illustrating an optical arrangement of a modification of the measuring apparatus according to the first embodiment of the present disclosure;

FIG. 11 is a diagram illustrating an optical arrangement of a modification of the measuring apparatus according to the first embodiment of the present disclosure;

FIG. 12 is a diagram illustrating an optical arrangement of a modification of the measuring apparatus according to the first embodiment of the present disclosure;

FIG. 13 is a flowchart presenting a measuring method according to the first embodiment of the present disclosure;

FIG. 14 is a flowchart presenting a defect detection process performed by a defect detection unit of the measuring apparatus according to the first embodiment of the present disclosure; and

FIGS. 15A and 15B are diagrams illustrating an operation of an optical section of a measuring apparatus according to a second embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments for implementing the disclosure are described below referring to the drawings. Like reference signs are applied to identical or corresponding components throughout the drawings and redundant description may be omitted.

First Embodiment

Configuration of Optical System

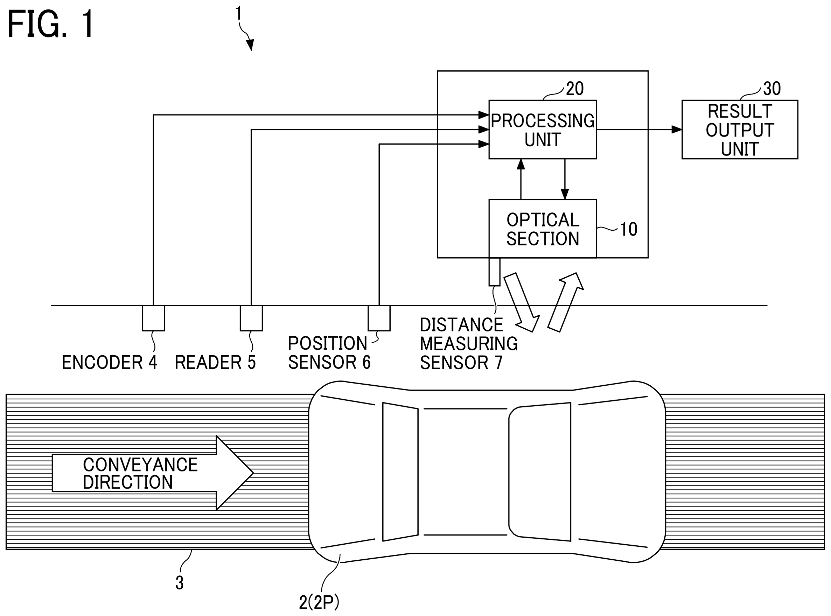

FIG. 1 is a diagram of a configuration of a measuring apparatus 1 according to a first embodiment of the present disclosure. The measuring apparatus 1 measures the state of a surface 2P of a measurement object 2, which is being conveyed in a conveyance direction. The state of the surface 2P of the measurement object 2 may be represented by one or more characteristic values based on the image of the surface 2P. The measurement object 2 is conveyed by a conveyor 3. The measurement object 2 is, for example, a painted vehicle body such as a large vehicle, a passenger car, or a compact car. The vehicle body is, for example, the surface 2P of the vehicle body, and the surface 2P of the vehicle body may be painted. The measurement object 2 may be an object other than a vehicle body, and the surface 2P of the measurement object 2 may not be painted.

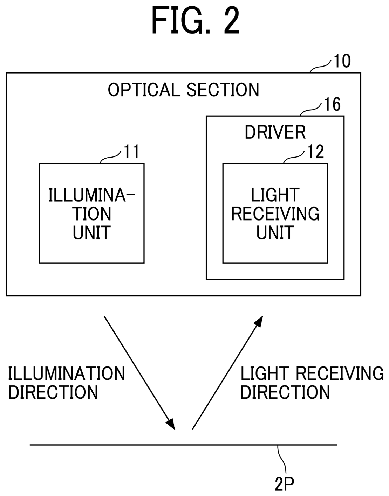

The measuring apparatus 1 includes an optical section 10. The optical section 10 will be described in detail with reference to FIG. 2. FIG. 2 is diagram illustrating a configuration of the optical section 10 according the first embodiment of the disclosure. The optical section 10 includes an illumination unit 11 as an illuminator, a light receiving unit 12 as a light reiver, and a driver 16. A component including the illumination unit 11 and the light receiving unit 12 is referred to as the "optical section 10".

The optical section 10 illuminates the measurement object 2 and receives light specularly reflected from the illuminated measurement object 2. The illumination unit 11 is fixedly installed on, for example, a housing of the optical section 10 and illuminates a measurement point of the measurement object 2. The measurement point is a position illuminated by the illumination unit 11. The "measurement point of the measurement object 2" is also simply referred to as a "measurement object 2" and a "measurement point".

Examples of the light receiving unit 12 include an imaging device such as a camera including an imaging element, such as a charge coupled device (CCD) or a complementary metal-oxide-semiconductor (CMOS).

The light receiving unit 12 receives the light specularly reflected from the measurement object 2, which is illuminated by the illumination unit 11.

The light receiving unit 12 may focus on the surface 2P of the measurement object 2 and receive and measure light reflected from the measurement object 2 at a predetermined time interval or in response to a trigger signal from the outside. An illumination direction of a light source 13 and a light receiving direction of the light receiving unit 12 are arranged along the optical axis so that the light is specularly reflected from the surface 2P.

The light receiving unit 12 is movably installed in the housing of the optical section 10. The movement of the light receiving unit 12 is performed by the driver 16 such as an actuator. The light receiving unit 12 is moved by the driver 16 such as an actuator so as to focus on the surface 2P of the measurement object 2 in accordance with, for example, the width and positional deviation of the measurement object 2 or meandering of the measurement object 2. The measuring apparatus 1 may store in advance width information including information relating to the width of the measurement object 2 in a direction perpendicular to the conveyance direction, and the light receiving unit 12 may be moved based on distance measurement data from a distance measuring sensor 7 and the width information on the measurement object 2.

A region to be measured by the measuring apparatus 1 is predefined on the measurement object 2. However, the entire measurement object 2 does not have to be within the measurement region. For example, when the measurement object 2 is a vehicle body, regions with large curved surfaces, such as around a door knob or near the edges of the vehicle body, are typically excluded from the measurement region. The illumination unit 11 and the light receiving unit 12 may be arranged according to a measurable region that has been predefined as the measurement region.

When the light receiving unit 12 is an imaging device, the light receiving unit 12 generates image information on the measurement object 2. The image information may be, for example, a two-dimensional color image. The light receiving unit 12 may be a visible light camera such as an area camera.

The surface 2P of the measurement object 2 may be a smooth, glossy surface. The light incident on the surface 2P from the illumination unit 11 is specularly reflected because the incident angle equals the reflection angle. Further, the surface 2P is a set of multiple curved surface regions having different normal directions and curvatures.

The measuring apparatus 1 further includes an encoder 4, a reader 5, a position sensor 6, a distance measuring sensor 7, a processing unit 20, and a result output unit 30. The processing unit 20 controls, for example, the timing of the operation of the measuring apparatus 1. The encoder 4, the reader 5, the position sensor 6, and the distance measuring sensor 7 are connected to the processing unit 20. The encoder 4 monitors the conveyance state of the conveyor 3, such as its conveyance speed. The reader 5 acquires width information including information on the measurement object 2 (for example, the unique ID, model, and color) and information relating to the width of the measurement object 2 in the direction perpendicular to the conveyance direction.

The position sensor 6 acquires position information on the measurement object 2, such as approach information to the measurement region or the presence in the measurement region of the measurement object 2. As the distance measuring sensor 7, a time-of-flight (TOF) sensor, a stereo camera, a light detection and ranging (LiDAR) sensor, or the like is used. The distance measuring sensor 7 measures the distance to the measurement object 2.

The processing unit 20 measures the state of the measurement object 2 and detects a defect based on the light specularly reflected from the measurement object 2 and received by the light receiving unit 12. The result output unit 30 outputs information relating to the characteristic values and defects at the respective measurement positions of the measurement object 2 in formats such as a monitor display, printed documents, or electronic data.

The measuring apparatus 1 can provide information useful for identifying the cause of the defect in the preceding process and for repairing the defect in the subsequent process, based on the determined defect type.

When the measurement object 2 is a painted vehicle body, the measuring apparatus 1 measures the presence of defects in painted surfaces 2P of parts such as the door, bonnet, roof, trunk lid, and rear bumper of the vehicle body. The defects in the painted surfaces 2P refer to scratches, cracks, unevenness, dirt, and discoloration on the painted surfaces. The painting defects include dust particles, fisheyes, pinholes, and orange peel.

In the example in FIG. 1, the measuring apparatus 1 is placed on one side of the conveyor 3. This is not a limitation. In some embodiments, the measuring apparatus 1 is placed on each side of the conveyor 3. When the measuring apparatus 1 is placed on each side of the conveyor 3, the measurement object 2 may be placed between the measuring apparatuses 1. Alternatively, the measuring apparatuses 1 may be arranged offset from each other in the conveyance direction, with the measurement object 2 positioned between the measuring apparatuses 1.

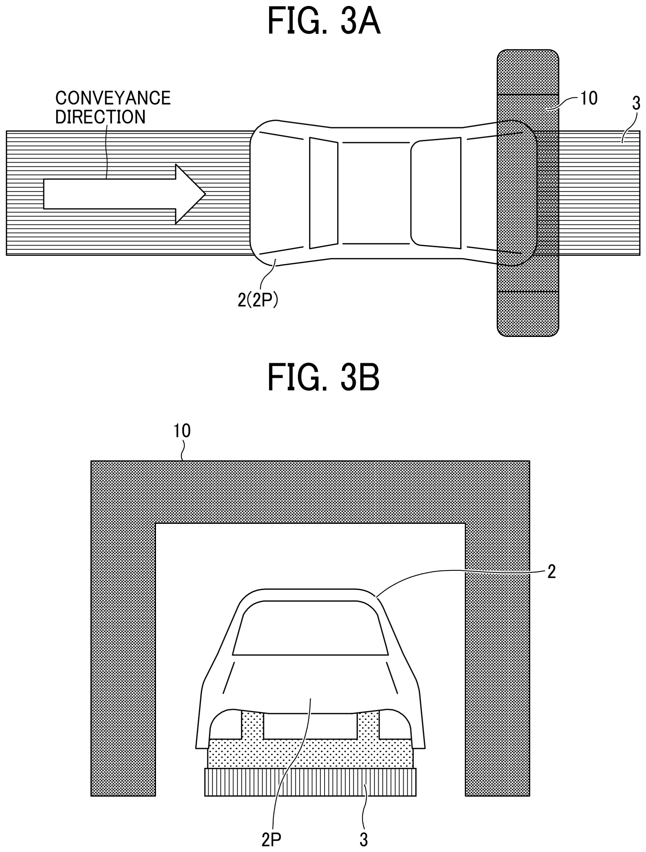

FIGS. 3A and 3B are diagrams illustrating the relation between the optical section 10 of the measuring apparatus 1 and the measurement object 2 according to the first embodiment of the present disclosure. FIG. 3A is a plan view, and FIG. 3B is a front view. The measurement object 2 is conveyed in the conveyance direction by the conveyor 3. The optical section 10 is arranged in a gate shape (i.e., U-shape) to surround the conveyed measurement object 2 (i.e., to surround the conveyed measurement object 2 on multiple sides, including completely surrounding the measurement object 2 along a transverse plane perpendicular to the conveyance direction). The measurement object 2 is conveyed at a constant speed through the gate-shaped optical section 10 for measurement. When the measurement object 2 passes through the gate-shaped optical section 10, the entire measurement object 2 is measured.

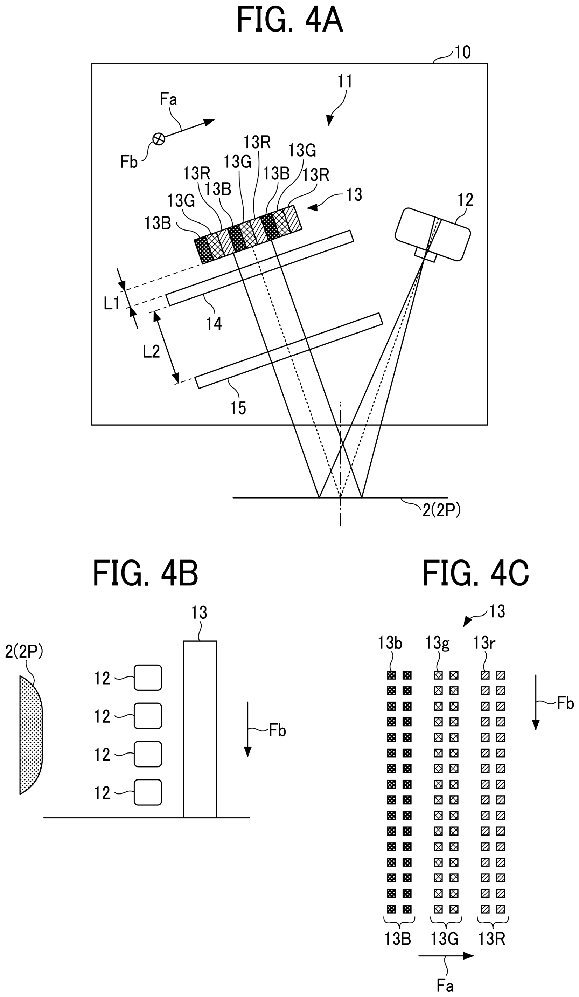

FIGS. 4A, 4B, and 4C are diagrams illustrating an optical arrangement of the measuring apparatus 1 according to the first embodiment of the present disclosure. FIG. 4A is a plan view. FIG. 4B is a front view. FIG. 4C is a diagram illustrating details of the light source 13. FIGS. 4A, 4B, and 4C illustrate an array direction Fa and an orthogonal direction Fb. The array direction Fa indicates an array direction in which light sources 13B, 13G, and 13R are arranged. The orthogonal direction Fb indicates a direction orthogonal to the array direction Fa. Like reference signs are applied to components identical or corresponding to components described above, and redundant description is omitted.

As illustrated in FIG. 4A, in the measuring apparatus 1, the illumination unit 11 includes a light source 13, a first diffuser plate 14, and a second diffuser plate 15.

The light source 13 includes multiple light sources 13B, 13G, and 13R. The light sources 13B, 13G, and 13R emit light beams having different wavelengths. For example, the light sources 13B, 13G, and 13R may emit blue light, green light, and red light, respectively. The light sources 13B, 13G, and 13R are arranged along the array direction Fa. The array direction Fa has a predetermined angle with respect to the horizontal direction of the surface 2P of the vehicle body.

FIG. 4B illustrates the light receiving unit 12 and the light source 13 positioned relative to the surface 2P of the measurement object 2. The light source 13 has directivity that is elongated in the orthogonal direction Fb. Multiple light receiving units 12 are arranged in the orthogonal direction Fb.

In the light sources 13, point light sources 13r, 13g, and 13b that emit light beams having the same wavelengths are arranged in the orthogonal direction Fb. Thus, linear light sources that emit light beams having different wavelengths may be arranged in the array direction Fa in a predetermined order. The "point light sources 13r, 13g, and 13b" include red point light sources 13r, green point light sources 13g, and blue point light sources 13b. When not distinguished from one another, the red point light sources 13r, the green point light sources 13g, and the blue point light sources 13b are also simply referred to as point light sources 13r, 13g, and 13b.

As illustrated in FIG. 4C, the light source 13 includes light sources 13B, 13G, and 13R. The light source 13B includes multiple point light sources 13b arranged in the orthogonal direction Fb. The light source 13G includes multiple point light sources 13g arranged in the orthogonal direction Fb. The light source 13R includes multiple point light sources 13r arranged in the orthogonal direction Fb. While the light sources are arranged in the order of the colors of blue, green, and red as the predetermined order in FIGS. 4A, 4B, and 4C, the order of the array may be different from the above order. The order may be an order including a light source of a color other than the colors of blue, green, and red.

The colors of red, green, and blue are the minimum colors for performing phase shift calculations during defect detection and are also the primary colors of visible light, making them versatile and widely applicable.

While the blue point light sources 13b, the green point light sources 13g, and the red point light sources 13r are arranged in two rows each in the orthogonal direction Fb in FIG. 4C, the number of rows is not limited to two, and one or multiple rows such as one or three rows may be provided. The blue point light sources 13b, the green point light sources 13g, and the red point light sources 13r are arranged in the orthogonal direction Fb at a pitch of, for example, several millimeters to several tens of millimeters. With such an array, the light source 13 is used as a light source including linear light sources of multiple colors.

The number of blue point light sources 13b, the number of green point light sources 13g, and the number of red point light sources 13r do not have to be the same, and can be changed according to the emission luminance or the spectral sensitivity of the light receiving unit 12.

Each of the point light sources 13r, 13g, and 13b may include a lens member that leads an optical path of emitted light to the measurement object 2. The lens member is provided on, for example, a chip of each of the point light sources 13r, 13g, and 13b. With the lens member, the angle of divergence of the light emitted by each of the point light sources 13r, 13g, and 13b can be reduced, and the directivity is enhanced. Thus, the illumination pattern with high power can be formed on the second diffuser plate 15. Further, when the sinusoidal illumination pattern in the array direction Fa and the uniform illumination pattern in the orthogonal direction Fb are formed, the degrees of freedom of the angles of divergence of the light emitted by the point light sources 13r, 13g, and 13b increase.

The point light sources 13r, 13g, and 13b may be light emitting diode (LED) elements, organic electro luminescence (EL) elements, or laser elements. In order to form an illumination pattern with further high luminance on the second diffuser plate 15, an optical element may be additionally provided in the illumination unit 11. For example, optical elements may be inserted between the point light sources 13r, 13g, and 13b and the first diffuser plate 14, or optical elements may be inserted in another region.

The first diffuser plate 14 is disposed between the light source 13 and the measurement object 2. The second diffuser plate 15 is disposed between the first diffuser plate 14 and the measurement object 2. The second diffuser plate 15 forms an illumination pattern of light that illuminates the measurement object 2. The formed illumination pattern can be used as a secondary light source for the measurement object 2.

The light source 13, the first diffuser plate 14, and the second diffuser plate 15 are positioned in parallel to each other. In other words, the array direction Fa of the multiple light sources 13B, 13G, and 13R, the first diffuser plate 14, and the second diffuser plate 15 are positioned in parallel to each other. The lengths of the first diffuser plate 14 and the second diffuser plate 15 in the array direction Fa are preferably equal to each other and are preferably larger than the length of the light source 13.

FIG. 4A also illustrates distances L1 and L2. The distance L1 indicates the distance between the light source 13 and the first diffuser plate 14. The distance L2 indicates the distance between the first diffuser plate 14 and the second diffuser plate 15. In order to uniformize the distribution of the luminance in the orthogonal direction Fb of the illumination pattern formed on the second diffuser plate 15, a relation of L1 < L2 is preferably satisfied.

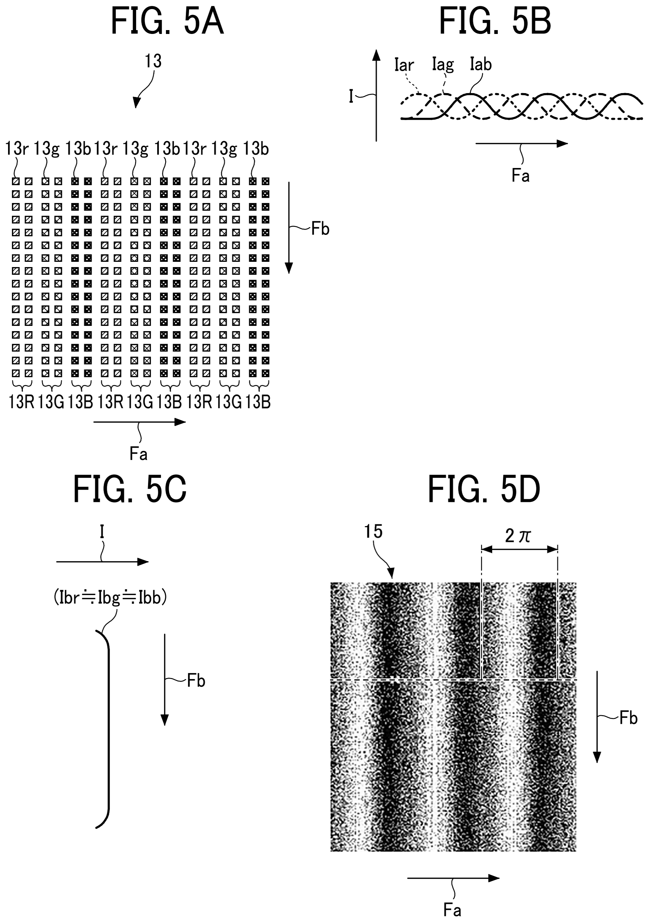

FIGS. 5A, 5B, 5C, and 5D are diagrams illustrating the illumination pattern formed on the second diffuser plate 15 in the measuring apparatus 1 according to the first embodiment of the present disclosure. FIG. 5A illustrates an array of the light source 13. FIG. 5B illustrates a distribution of the luminance of light in the array direction Fa. FIG. 5C illustrates a distribution of the luminance of light in the orthogonal direction Fb. FIG. 5D illustrates an illumination pattern formed on the second diffuser plate 15. The reference character "I" illustrated in FIGS. 5B and 5C indicates the luminance of light. Like reference signs are applied to components identical or corresponding to components described above, and redundant description is omitted.

As illustrated in FIG. 5A, the light source 13 includes multiple light sources 13R, multiple light sources 13G, and multiple light sources 13B arranged in the array direction Fa in the order of the light source 13R, the light source 13G, and the light source 13B. The light source 13R includes multiple red point light sources 13r. The light source 13G includes multiple green point light sources 13g. The light source 13B includes multiple blue point light sources 13b.

FIG. 5B illustrates luminances Iar, Iag, and Iab. The luminances Iar, Iag, and Iab indicate luminances of red light from the light source 13R, green light from the light source 13G, and blue light from the light source 13B in the array direction Fa, respectively. To calculate phase information by performing phase shift calculations during defect detection, it is preferable that the distribution of the luminance of each light beam matches a sinusoidal pattern, although a distribution close to a sinusoidal pattern is also acceptable.

FIG. 5C illustrates luminances Ibr, Ibg, and Ibb. The luminances Ibr, Ibg, and Ibb indicate luminances of red light from the light source 13R, green light from the light source 13G, and blue light from the light sources 13B in the orthogonal direction Fb, respectively. As illustrated in FIG. 5C, the luminances Ibr, Ibg, and Ibb are substantially the same value in the orthogonal direction Fb. In order to use the light source 13 as a linear light source, the distribution of the luminance of each light beam is preferably uniform.

FIG. 5D illustrates a distribution of the luminance for each of the colors of red, green, and blue as the illumination pattern formed on the second diffuser plate 15. The sine waves in the array direction Fa, corresponding to red, green, and blue, overlap with a phase shift of $2\pi/3$ radians therebetween. To accurately calculate phase information using phase shift calculations during defect detection, it is preferable that the illumination pattern is a stripe pattern combining light and dark patterns, where the luminance of light varies sinusoidally in the array direction Fa for each wavelength.

Configuration of Measuring Apparatus 1

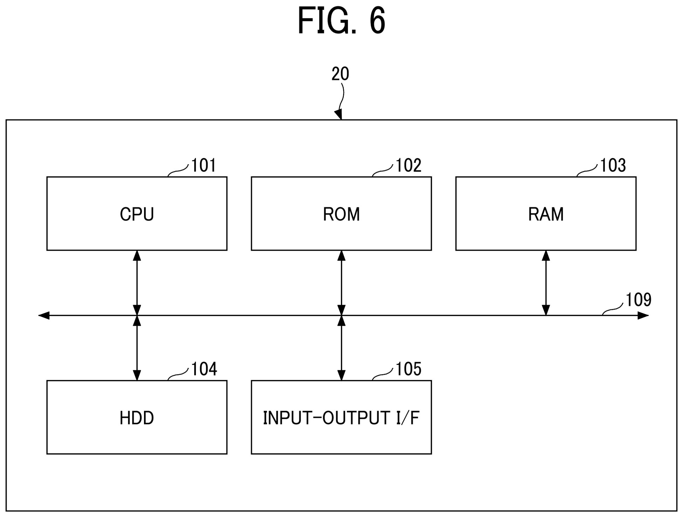

FIG. 6 is a block diagram illustrating a hardware configuration of the processing unit 20 of the measuring apparatus 1 according to the first embodiment of the present disclosure. The processing unit 20 includes a central processing unit (CPU) 101, a read only memory (ROM) 102, a random access memory (RAM) 103, a hard disk drive (HDD) 104, and an input-output interface (I/F) 105. These components are electrically connected to one another via a bus 109.

The CPU 101 controls the operation of the processing unit 20. The ROM 102 stores a program executed in the CPU 101. The RAM 103 is used as a work area in which the CPU 101 executes a program. The HDD 104 stores various kinds of information such as programs. The input-output I/F 105 is an interface for inputting and outputting various signals and data to and from an external device.

Part or all of the functions of the CPU 101 may be implemented by an electronic circuit, such as an application specific integrated circuit (ASIC) or a field-programmable gate array (FPGA). Instead of the CPU 101, a graphics processing unit (GPU) may be provided.

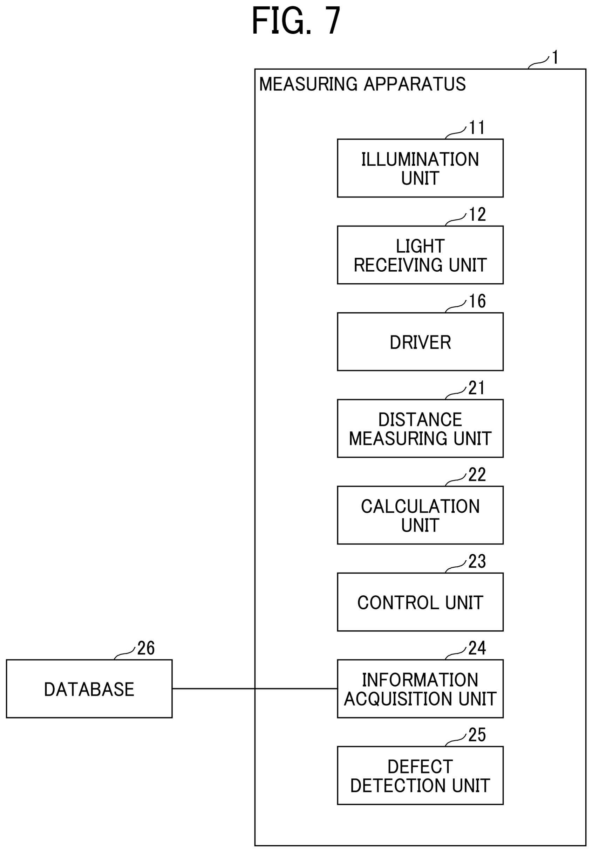

FIG. 7 is a block diagram illustrating a functional configuration of the measuring apparatus 1 according to the first embodiment of the present disclosure.

The measuring apparatus 1 includes the illumination unit 11, the light receiving unit 12, the driver 16, a distance measuring unit 21, a calculation unit 22, a control unit 23, an information acquisition unit 24, and a defect detection unit 25.

In the measuring apparatus 1, a database 26 may be included in another apparatus that can communicate with the measuring apparatus 1, a server on a cloud, or the like, or may be included in the measuring apparatus 1.

The illumination unit 11 is fixedly installed and illuminates the measurement object 2. The light receiving unit 12 receives light specularly reflected from the measurement object 2, which is illuminated by the illumination unit 11. The distance measuring unit 21 measures a measurement distance that is a distance from a side of the illumination unit 11 facing the measurement object 2 to the measurement object 2. The distance measuring unit 21 measures the measurement distance by acquiring distance measurement data from the distance measuring sensor 7.

The measuring apparatus (1) further includes a distance measuring sensor (7) to acquire data of the measurement distance. The housing houses the illumination unit (11) and the light receiving unit (12). The distance measuring unit (21) is further configured to: measure a length of the perpendicular line, from the second face of the housing to a virtual plane including the first face the measurement distance; and measure the measurement distance based on the data of the measurement distance acquired by the distance measuring sensor (7).

While the measurement distance may be, for example, a distance from a surface of a housing, which includes the optical section 10, facing the measurement object 2 to the measurement object 2, the measurement distance is not limited to the above-described distance and may be any distance as long as the distance is based on the distance measurement data from the distance measuring sensor 7 installed in a fixed device such as the illumination unit 11. The measurement distance is a length of the perpendicular from the surface of the housing of the optical section 10 facing the measurement object 2 to a virtual plane. The virtual plane is a surface of the measurement object 2 and is a virtual plane extending in the conveyance direction and including a measurement point illuminated by the illumination unit 11.

The calculation unit 22 calculates a movement distance that is a distance by which the light receiving unit 12 is moved, based on an illumination angle and an amount of change in the measurement distance. The illumination angle is an angle formed between the optical axis of light regularly reflected from the measurement object 2 and a perpendicular line to a virtual plane. The virtual plane extends in a conveyance direction and includes the measurement point on a surface of the measurement object 2. The amount of change in the measurement distance is a value based on a change in the distance measurement data for each predetermined time period, and is a value corresponding to a change in the width and the positional deviation of the measurement object 2 and a change in the meandering of the measurement object 2.

The control unit 23 causes the driver 16 to move the light receiving unit 12 by the calculated movement distance in the conveyance direction and in a direction in which the measurement point illuminated by the illumination unit 11 has changed. More specifically, the control unit 23 causes the driver 16 to move the light receiving unit 12 by the movement distance calculated by the calculation unit 22 in a direction in which the measurement distance has changed and in a direction parallel to the optical axis of light incident on the measurement object 2. That is, the measurement distance changes due to the width and the positional deviation of the measurement object 2 and the meandering of the measurement object 2, and the light receiving unit 12 moves in accordance with the change in the measurement distance.

The driver (16) controls the actuator to move the light receiving unit (12) by the movement distance in the moving direction parallel to the optical-axis direction of the illumination light.

The information acquisition unit 24 acquires width information including information relating to a width of the measurement object 2 in the direction perpendicular to the conveyance direction. The width information can be acquired from the reader 5. The information acquisition unit 24 may acquire information relating to the shape of the measurement object 2 in addition to the width information. At this time, the calculation unit 22 calculates the movement distance of the light receiving unit 12 based on the amount of change in the measurement distance and the width information. With the use of the width information, it is possible to check the calculation result of the movement distance of the light receiving unit 12 calculated by the calculation unit 22 and detect an error.

The defect detection unit 25 detects a defect by measuring a state of the measurement point of the measurement object 2 based on the light specularly reflected from the measurement object 2 and received by the light receiving unit 12. More specifically, the defect detection unit 25 generates image information based on the light specularly reflected from the measurement object 2 and received by the light receiving unit 12, calculates a characteristic value based on the generated image information, and measures the state of the measurement object 2 in accordance with the calculated characteristic value.

More specifically, the defect detection unit 25 generates the image information based on the light specularly reflected from the measurement object 2 and received by the light receiving unit 12, and calculates phase information based on a distribution of luminance of light included in the image information. The defect detection unit 25 calculates a characteristic value based on at least the phase information, and detects a defect by measuring the state of the measurement object 2 in accordance with the characteristic value.

The defect detection unit 25 detects a defect of the object based on the light specularly reflected from the first face of the object and received by the light receiving unit 12.

The defect detection unit 25 may calculate one or multiple characteristic values based on a predetermined algorithm. The defect detection unit 25 may calculate the characteristic value based on luminance information, phase information, color information, and information obtained by combining these items of information. Examples of the characteristic value include the magnitude of the peak value or the like of a signal level in a potential defect region, the amount of change in the slope or the like of the signal, and the area of the region.

Further, the defect detection unit 25 detects a defect based on the calculated characteristic value and a defect determination criterion. The defect detection unit 25 detects a defect using a defect inspection algorithm based on the characteristic value, the state of the surface 2P, and an inspection criterion set for each of various types of defects.

The database 26 stores the width information including the information relating to the width of the measurement object 2 in the direction perpendicular to the conveyance direction. The database 26 may be included in another apparatus that can communicate with the measuring apparatus 1, a server on a cloud, or the like, or may be included in the measuring apparatus 1.

A measuring apparatus (1) includes a housing (10), an illumination unit (11) fixed to the housing (10); a light receiving unit (12), an actuator, a distance measuring unit (21), a calculation unit (22), and a control unit (23). The illumination unit (11) emits illumination light, in an optical-axis direction, to a first face of an object conveyed in a conveyance direction; and illuminates, the first face of the object at a first position and at an illumination angle, with the illumination light. The light receiving unit (12) receives reflection light, specularly reflected from the first face of the object illuminated by the illumination unit (11). The actuator (16) moves the light receiving unit. The distance measuring unit (21) controls the illumination unit and the light receiving unit to measure a measurement distance, in a perpendicular direction perpendicular to the first face, between the first face of the object and a second face of the housing facing the first face of the object. The calculation unit (22) determines a movement distance and a moving direction of the light receiving unit based on the illumination angle between an optical axis of the reflection light and a perpendicular line in the perpendicular direction; and an amount of change in the measurement distance in the perpendicular direction. The control unit (23) drives the actuator to move the light receiving unit (12) by the movement distance in the moving direction.

A measuring method includes: emitting, from an illumination unit fixed to a housing, illumination light, in an optical-axis direction, to a first face of an object conveyed in a conveyance direction; illuminating, the first face of the object at a first position and at an illumination angle, with the illumination light; receiving, by a light receiving unit, reflection light, specularly reflected from the first face of the object illuminated by the illumination unit; controlling the illumination unit and the light receiving unit to measure a measurement distance, in a perpendicular direction perpendicular to the first face, between the first face of the object and a second face of the housing facing the first face of the object; determining a movement distance and a moving direction of the light receiving unit based on the illumination angle between an optical axis of the reflection light and a perpendicular line in the perpendicular direction and an amount of change in the measurement distance in the perpendicular direction; and driving an actuator to move the light receiving unit by the movement distance in the moving direction.

Operation of Optical Section 90 According to Comparative Example

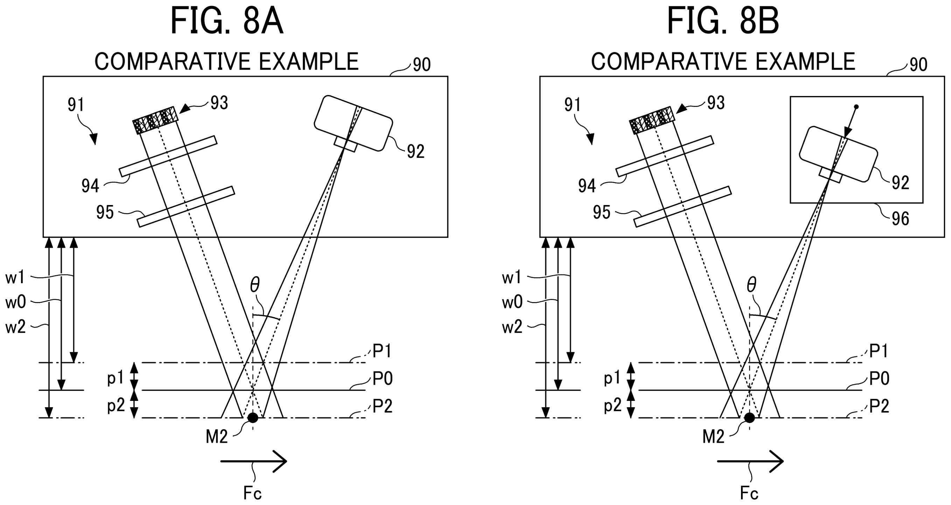

FIGS. 8A and 8B are diagrams illustrating an operation of an optical section 90 according to a comparative example. FIGS. 8A and 8B illustrate an example of an operation of the optical section 90 when a measurement distance that is a distance from a surface of a housing of the optical section 90 facing a measurement object 2 to the measurement object 2 changes. FIG. 8A illustrates the state before a light receiving unit 92 moves. FIG. 8B illustrates the state after the light receiving unit 92 moves.

Reference characters P0, P1, and P2 in the drawings represent virtual planes, and the virtual plane P0 is a reference virtual plane. The virtual plane P1 is a plane extending in the conveyance direction and including a measurement point when the width of the measurement object 2 in the direction perpendicular to the conveyance direction is the maximum. The virtual plane P2 is a plane extending in the conveyance direction and including a measurement point when the width of the measurement object 2 in the direction perpendicular to the conveyance direction is the minimum. The reference virtual plane P0 is a plane parallel to the virtual plane P1 and the virtual plane P2, and is a plane between the virtual plane P1 and the virtual plane P2.

Reference character Fc in the drawings represents the conveyance direction. Reference characters w0, w1, and w2 represent measurement distances when the measurement point is located on the reference virtual plane P0, the virtual plane P1, and the virtual plane P2, respectively. In the illustrated example, the position of the measurement point changes from a position of a point M0 to a position of a point M2, and the amount of change in the measurement distance is p2.

An optical section 90 according to the comparative example includes an illumination unit 91 and a light receiving unit 92. The illumination unit 91 emits linear light to the measurement object 2. The light receiving unit 92 receives light specularly reflected from the measurement object 2 illuminated by the illumination unit 91. The illumination unit 91 includes multiple linear light sources 93. The linear light sources 93 are arranged in an order in which a red linear light source, a green linear light source, and a blue linear light source are repeatedly arranged. The light receiving unit 92 receives light specularly reflected from the illuminated measurement object 2. A first diffuser plate 94 and a second diffuser plate 95 are disposed between the linear light source 93 and the measurement object 2.

As illustrated in FIG. 8A, with a change in the width of the measurement object 2, the distribution of the light reflected from the measurement object 2 changes. When the measurement point becomes the point M2, the positional relationship with the optical axis of the light receiving unit 92 changes, and the distribution of the reflected light on the captured image changes. These changes affect the accuracy of detection of a defect in the measurement object 2, and it is difficult to accurately detect a defect.

As a countermeasure, the light receiving unit 92 is moved by the driver 96 in the optical-axis direction of the reflected light that is a direction of an arrow illustrated in FIG. 8B. At this time, while the light receiving unit 92 is in focus on the point M2 at which the measurement point is present, the positional relationship between the point M2 and the optical axis of the light receiving unit 92 deviates. Thus, even when the light receiving unit 92 is moved in the optical-axis direction to adjust the focus, the captured image is not a desirable captured image, and it is difficult to accurately detect a defect.

Operation of Optical Section 10 According to First Embodiment

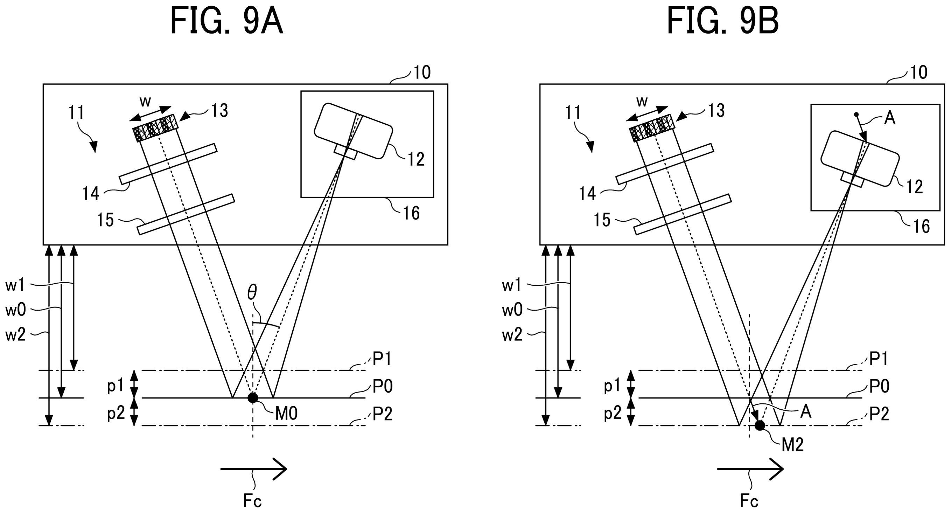

FIGS. 9A and 9B are diagrams illustrating an operation of the optical section 10 according to the first embodiment of the present disclosure. FIGS. 9A illustrates a case where the measurement point is a point M0 on a reference virtual plane P0. FIG. 9B illustrates a case where the measurement point has moved to a point M2. At this time, the amount of change in the measurement distance is p2.

Like reference signs are applied to components identical or corresponding to components described above, and redundant description is omitted.

Reference character θ in the drawing represents an illumination angle formed by the perpendicular to the virtual plane P2 and the optical axis of the light specularly reflected from the measurement object 2. The measurement point is present at the point M2 that is the intersection between the virtual plane P2 and the optical axis of the light incident on the measurement object 2. An arrow A in the drawing indicates a direction in which the measurement point has changed and a direction along the optical axis of the light incident on the measurement object 2. Reference character w in the drawing represents a width of the light source 13 in the array direction Fa.

The illumination condition of light from the illumination unit 11 is set so that the distribution of light illuminated on the surface of the measurement object 2 is substantially constant even when the width of the measurement object 2 changes and the position of the measurement point changes. The illumination condition is that illumination light beams from the light source 13 are emitted to the measurement point substantially in parallel and that the change in the position of the measurement point is sufficiently small with respect to the distance from the light source 13 to the measurement point.

At this time, the change in the positional relationship between the light source 13 and the measurement point is negligible from the viewpoint of the width w of the light source 13 in the array direction Fa and the detection of a defect.

It is desirable to move the light receiving unit 12 so that the positional relationship between the measurement point and the light receiving unit 12 does not change even when the width of the measurement object 2 changes, the position of the measurement object 2 deviates, and the measurement object 2 meanders. At this time, the light receiving unit 12 is moved by the driver 16 in the same direction as the arrow A that is a direction parallel to the optical axis of the light incident on the point M2 that is the measurement point of the measurement object 2. The movement distance of the light receiving unit 12 at this time is $p2/\cos\theta$.

When the measurement point has changed in the measuring apparatus 1 according to the present embodiment, the entire optical section 10 is not moved, the illumination unit 11 is fixed, and the light receiving unit 12 is moved as indicated by the arrow A. With this configuration, the positional relationship between the measurement point and the light receiving unit 12 does not change, and the measurement point in the captured image is in focus. Thus, a favorable captured image is acquired, and thus a defect can be accurately detected.

Since the illumination angle θ is a fixed value, the calculation unit 22 can uniquely calculate the movement distance of the light receiving unit 12. The control unit 23 causes the light receiving unit 12 to be moved in accordance with the calculation result of the movement distance and in the movement direction obtained by the calculation unit 22. More specifically, the control unit 23 causes the light receiving unit 12 to be moved using the driver 16 such as an electric actuator. The driver 16 moves the light receiving unit 12 by the movement distance calculated by the calculation unit 22. The driver 16 moves the light receiving unit 12 during a period from when the measurement object 2 for which the measurement has been completed is conveyed by the conveyor 3 to when the next measurement object 2 is conveyed in, and does not move the light receiving unit 12 during the measurement of the measurement object 2.

The reference virtual plane P0 is preferably a reference plane in the case where the measurement distance is an intermediate distance between the distance when the width of the measurement object 2 is the maximum and the distance when the width of the measurement object 2 is the minimum. At this time, the measurement distance w0 is an intermediate distance between the measurement distances w1 and w2, and p1 = p2 is established. Then, the position of the light receiving unit 12 when the measurement point is the position of the point M0 and the measurement distance is w0 is set as the reference position.

With the reference position as a starting point, the light receiving unit 12 moves by the movement distance calculated by the calculation unit 22 in accordance with the change in the measurement distance. Thus, the movement distance of the light receiving unit 12 is minimized, and there is an advantage that a member such as an electric actuator included in the drier 16 is inexpensive. The reference position of the light receiving unit 12 is not limited to the above-described position, and may be set based on the width information on the measurement object 2 so that the movement distance of the light receiving unit 12 cumulatively decreases by weighting based on the shape of the measurement object 2.

First Modification

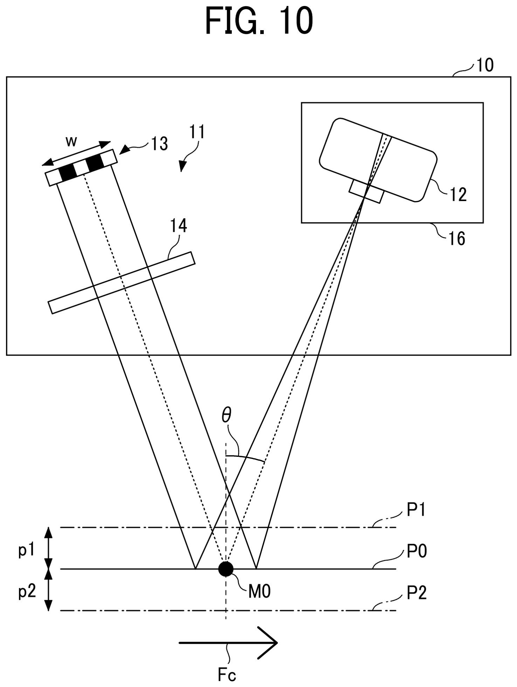

FIG. 10 is a diagram illustrating an optical arrangement of a modification of the measuring apparatus 1 according to the first embodiment of the present disclosure. In FIGS. 10 to 12, like reference signs are applied to components identical or corresponding to components described above, and redundant description is omitted.

Unlike the case of the first embodiment, the light source 13 of the illumination unit 11 is a light source having multiple white directivities to form a periodic light and dark pattern. In this configuration, a stripe pattern is formed on the measurement object 2 illuminated by the illumination unit 11. The light receiving unit 12 includes multiple area cameras and receives light specularly reflected from the illuminated measurement object 2. The light receiving unit 12 is moved by the driver 16.

In the illustrated example, three white LEDs are placed at equal intervals in the light source 13. The illumination direction of light from the light source 13 and the optical-axis direction of the light receiving unit 12 are arranged so that the light is specularly reflected from the measurement object 2. In the illustrated example, unlike the case of the first embodiment, the second diffuser plate 15 is not provided, and just the first diffuser plate 14 is provided as the diffuser plate. Without being limited to the illustrated example, the second diffuser plate 15 may be provided. The number of white LEDs is not limited to three, and may be any number. Even when light beams having multiple wavelengths are not used for the light source 13, a light beam is diffused by the first diffuser plate 14 as in the case of the embodiment, and the measurement object 2 can be measured more inexpensively.

Second Modification

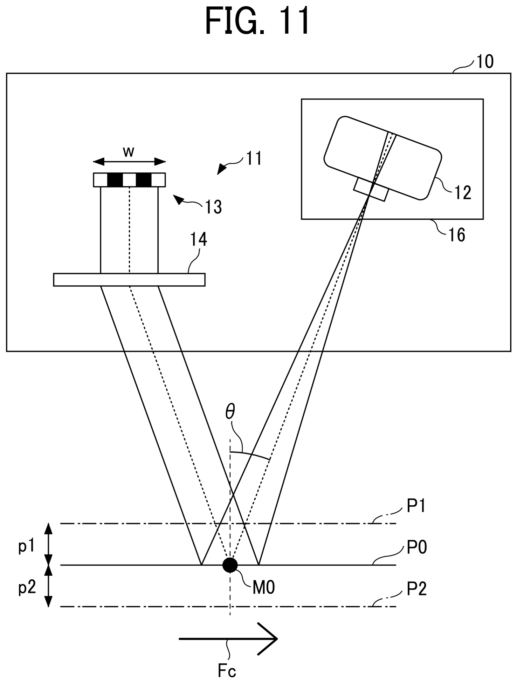

FIG. 11 is a diagram illustrating an optical arrangement of a modification of the measuring apparatus 1 according to the first embodiment of the present disclosure. Unlike the case of the first embodiment, the light source 13 of the illumination unit 11 is a light source having multiple white directivities to form a periodic light and dark pattern, and the light source 13 and the first diffuser plate 14 are provided in parallel to the conveyance direction Fc.

While the second diffuser plate 15 is not provided and just the first diffuser plate 14 is provided as the diffuser plate in the present modification, the second diffuser plate 15 may be provided. As in the present embodiment, the light source 13 may include multiple light sources 13B, 13G, and 13R. For example, the light sources 13B, 13G, and 13R may emit blue light, green light, and red light, respectively. Since the measurement point of the measurement object 2 is illuminated by the first diffuser plate 14, the measurement point can be measured as in the present embodiment.

Third Modification

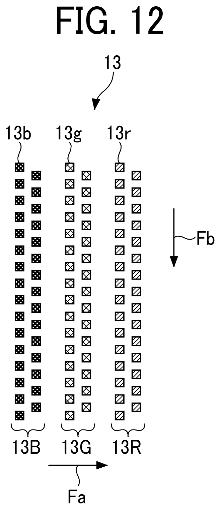

FIG. 12 is a diagram illustrating an optical arrangement of a modification of the measuring apparatus 1 according to the first embodiment of the present disclosure. The illustrated example illustrates another example of the array of the point light sources 13r, 13g, and 13b. In FIG. 12, like reference signs are applied to components identical or corresponding to components described above, and redundant description is omitted.

In FIG. 12, unlike FIG. 4C, multiple blue point light sources 13b are arranged in a staggered manner, multiple green point light sources 13g are arranged in a staggered manner, and multiple red point light sources 13r are arranged in a staggered manner with respect to the orthogonal direction Fb.

Measuring Method

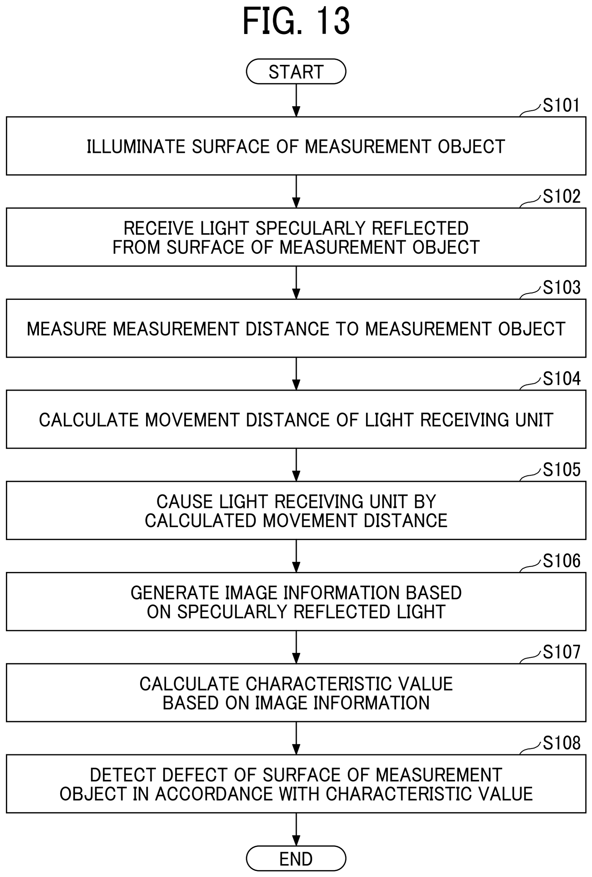

FIG. 13 is a flowchart presenting a measuring method according to the first embodiment of the present disclosure. The measuring method is executed in the measuring apparatus 1. The illumination unit 11 of the measuring apparatus 1 illuminates a measurement object 2 in step S101. Subsequently, the light receiving unit 12 of the measuring apparatus 1 receives light specularly reflected from the measurement object 2 illuminated by the illumination unit 11 in step S102.

The distance measuring unit 21 measures a measurement distance that is a distance from a side of the illumination unit 11, which illuminates the measurement object 2, facing the measurement object 2 to the measurement object 2 in step S103. Based on the illumination angle $\theta$ and an amount of change in the measurement distance, the calculation unit 22 calculates a movement distance that is a distance by which the light receiving unit 12, which receives the light specularly reflected from the measurement object 2, is moved in step S104. The control unit 23 causes the driver 16 to move the light receiving unit 12 by the movement distance calculated by the calculation unit 22 in the conveyance direction and in a direction in which the measurement point illuminated by the illumination unit 11 has changed in step S105.

The defect detection unit 25 generates image information based on the light specularly reflected from the measurement object 2 and received by the light receiving unit 12 in step S106. When multiple light receiving units 12 are used, image information from multiple regions of the measurement object 2 may be generated. The defect detection unit 25 calculates a characteristic value based on the generated image information in step S107. The defect detection unit 25 detects a defect of the measurement object 2 in accordance with the calculated characteristic value in step S108.

The measuring method according to one embodiment of the present disclosure involves the above-described steps. However, the measuring method according to one embodiment of the present disclosure may involve an additional step depending on factors such as the measurement conditions and environments.

Process Performed by Defect Detection Unit 25

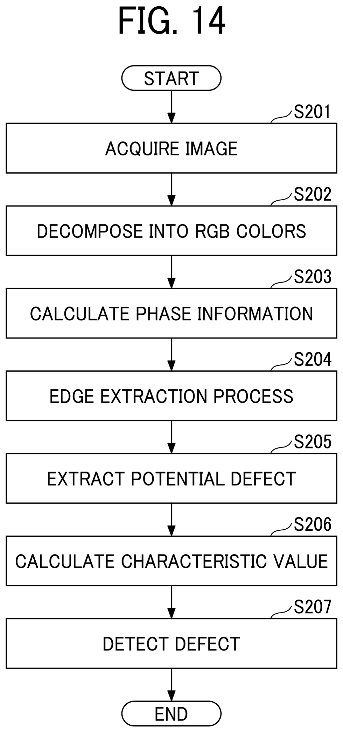

FIG. 14 is a flowchart presenting a defect detection process performed by the defect detection unit 25 of the measuring apparatus 1 according to the first embodiment of the present disclosure. In the example, the light source 13 uses three colors of red, green, and blue.

The process performed by the defect detection unit 25 can be roughly divided into two: preprocessing for emphasizing a defect of the measurement object 2 and post-processing for detecting a defect based on an image obtained by the preprocessing. In FIG. 14, the preprocessing indicates steps S201 to S205, and the post-processing indicates steps S206 to S208.

The light receiving unit 12 receives light specularly reflected from the measurement object 2 and acquires image information in step S201. The image information is used for defect detection in the defect detection unit 25. At this time, the light receiving unit 12 may store the acquired image information in the HDD 104 of the measuring apparatus 1.

The defect detection unit 25 decomposes the image information on the measurement object 2, acquired in step S201, into RGB colors in step S202. Specifically, an R signal indicating red, a G signal indicating green, and a B signal indicating blue are extracted from the image information. The spectral sensitivity curve of the light receiving unit 12 has overlaps between the R, G, and B signals, so the signals of each color, when the colors are simply decomposed, contain crosstalk. The defect detection unit 25 performs crosstalk correction to extract the R signal, the G signal, and the B signal without crosstalk.

The defect detection unit 25 calculates phase information based on the image information acquired in step S201, in step S203. Specifically, the defect detection unit 25 performs a smoothing process on each signal of RGB colors decomposed in step S202, based on the distribution of the luminance of light included in the image information. The smoothing process uses a standard averaging filter or a bilateral filter that preserves edges.

Then, the defect detection unit 25 calculates phase information by performing phase shift calculations using the smoothed signals. As a result, a two-dimensional phase image is acquired. To calculate the phase information by performing the phase shift calculations by the defect detection unit 25, it is preferable that the distribution of the luminance of each light beam matches a sinusoidal pattern, although a distribution of the luminance of light close to a sinusoidal pattern is also acceptable.

Then, the defect detection unit 25 performs an edge extraction process based on the phase information calculated in step S203, in step S204. Specifically, the edge extraction process is performed on the two-dimensional phase image, and a differential filter such as a Sobel filter, or a second-order differential filter such as a Laplacian filter or a Laplacian of Gaussian (LoG) filter is used.

The preprocessing performed in steps S201 to S205 by the defect detection unit 25 generates a two-dimensional defect-enhanced image where the defect of the measurement object 2 is highlighted. The defect detection unit 25 detects a defect based on the defect-enhanced image in the following post-processing. The defect-enhanced image is derived from the phase information, and at least one characteristic value is calculated based on the phase information.

The defect detection unit 25 extracts a potential defect region from the two-dimensional defect-enhanced image in step S205. The extraction process combines methods such as a binarization process and a contraction/expansion process to extract a potential defect region. At this time, the potential defect region may be extracted based on a region having no defect on the measurement object 2.

The defect detection unit 25 calculates a characteristic value based on at least the phase information for the potential defect region on the measurement object 2 in step S206. The defect detection unit 25 may calculate one or multiple characteristic values based on a predetermined algorithm. The defect detection unit 25 may calculate the characteristic value based on luminance information, phase information, color information, and information obtained by combining these items of information. The characteristic value may include the magnitude of a signal level (e.g., a peak value) in a potential defect region, the amount of change in signal (e.g., slope), or the area of the region.

The defect detection unit 25 detects a defect of the measurement object 2 according to the characteristic value calculated in step S206, in step S207. In the detection process, the defect detection unit 25 may determine the presence of a defect by comparing the characteristic value with the defect determination criterion. The number of characteristic values is not limited to one. The defect detection unit 25 can calculate multiple characteristic values and compare each of the characteristic values with the defect determination criterion to comprehensively detect a defect.

The characteristic value can be calculated from the image information acquired by the light receiving unit 12 or from the luminance based on the decomposed RGB colors. The characteristic value can also be calculated from a combination of these items of information and the phase information. For example, the defect detection unit 25 may calculate characteristic values based on the phase information and characteristic values based on the luminance to detect defects. Since there are many types of defects, a characteristic value for the specific properties of each defect is calculated.

With the measuring apparatus 1 according to the present embodiment, the fixedly installed illumination unit 11 illuminates the measurement object 2 being conveyed in the conveyance direction, and the light receiving unit 12 receives the light specularly reflected from the measurement object 2. Since the measurement distance that is the distance from the side of the illumination unit 11 facing the measurement object 2 to the measurement object 2 changes in accordance with the width, the positional deviation, and the meandering of the measurement object 2, the light receiving unit 12 is moved based on the illumination angle $\theta$ and the amount of change.

The light receiving unit 12 moves by the movement distance calculated by the calculation unit 22 in the conveyance direction and in the direction in which the measurement distance has changed. Thus, in the captured image of the measurement object 2, the measurement point is in focus, and the deviation of the positional relationship between the measurement point and the optical axis of the light receiving unit 12 is negligibly small from the viewpoint of measurement accuracy. With the measuring apparatus 1, thus, the measurement accuracy of the measurement object 2 is increased.

The measuring apparatus 1 has a configuration in which the illumination unit 11 is fixed and the light receiving unit 12 that is smaller and lighter than the illumination unit 11 moves. Thus, the mechanism of the optical section 10 can be configured at low cost. In a line in which various types of measurement objects 2 are produced, with the movement of the light receiving unit 12, the light receiving unit 12 can stably and repeatedly move in accordance with the width or the like of the measurement object 2 being conveyed. With the measuring apparatus 1 according to the present embodiment, the accuracy of measuring the measurement object 2 is increased, the introduction cost can be reduced, and the stability of the operation can be maintained.

Second Embodiment

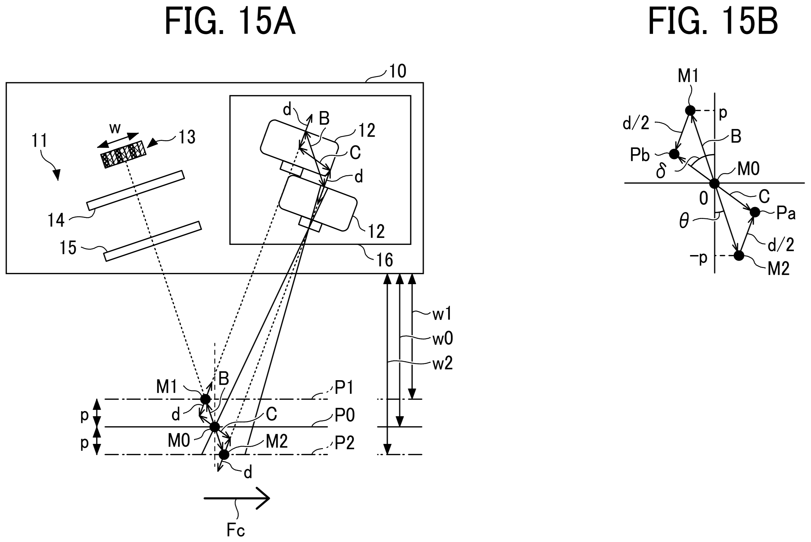

FIGS. 15A and 15B are diagrams illustrating an operation of an optical section 10 of a measuring apparatus 1 according to a second embodiment of the present disclosure. The measuring apparatus 1 according to the present embodiment includes the optical section 10. The optical section 10 includes an illumination unit 11, a light receiving unit 12, and the driver 16. The illumination unit 11 includes a light source 13, a first diffuser plate 14, and a second diffuser plate 15. Like reference signs are applied to components identical or corresponding to components described above, and redundant description is omitted.

FIG. 15A illustrates a movement range of the light receiving unit 12 when the measurement point moves between the point M1 and the point M2 as indicated by an arrow B. FIG. 15B illustrates arrows B and C indicating the movement of the light receiving unit 12 extracted from the diagram in FIG. 15A. The arrow C indicates a movement range of the light receiving unit 12 corresponding to a depth of field (DOF) of the light receiving unit 12. Reference character d in the drawings represents the depth of field of the light receiving unit 12.

The origin O in FIG. 15B is the point M0 that is a reference position of the measurement point. In the illustrated example, the measurement distance w0 is an intermediate distance between the measurement distances w1 and w2. The reference virtual plane P0 and the virtual plane P1 when the width of the measurement object 2 is the maximum are separated from each other by p. The reference virtual plane P0 and the virtual plane P2 when the width of the measurement object 2 is the minimum are separated from each other by p.

Reference character $\theta$ in the drawing represents an illumination angle formed by the perpendicular to the reference virtual plane P0 and the optical axis of light incident on the measurement object 2, and reference character $\delta$ represents an angle formed by the perpendicular to the reference virtual plane P0 and a direction in which the light receiving unit 12 moves.

As illustrated in FIG. 15A, when the width of the measurement object 2 is the maximum, that is, when the measurement point is the point M1, the light receiving unit 12 allows the depth of field up to the forward depth of field and moves the light receiving unit 12 by d/2 in a direction toward the measurement point. On the other hand, when the width of the measurement object 2 is the minimum, that is, when the measurement point is the point M2, the light receiving unit 12 allows the depth of field up to the rear depth of field, and the light receiving unit 12 is moved by d/2 in a direction away from the measurement point.

Thus, as illustrated in FIG. 15B, when the depth of field of the light receiving unit 12 is not taken into consideration, the light receiving unit 12 moves between the point M1 and the point M2 as indicated by the arrow B, and when the depth of field of the light receiving unit 12 is taken into consideration, the light receiving unit 12 moves between a point Pa and a point Pb as indicated by the arrow C.

Thus, when the arrow B and the arrow C are compared with each other, it can be seen that the movement distance of the light receiving unit 12 is reduced in consideration of the depth of field.

When reference character $\theta$ represents an illumination angle, reference character p represents the amount of change in the measurement distance, reference character L represents the movement distance of the light receiving unit 12 in consideration of the depth of field, and reference character $\delta$ represents the angle formed by the perpendicular to the virtual plane P0, P1, or P2 and the direction in which the light receiving unit 12 moves, the movement distance L and the angle $\delta$ satisfy relational expressions (1) and (2) below,

$$\tan\delta = (p\sin\theta/\cos\theta + d\sin\theta/2)/(-p + d\cos\theta/2) \ldots (1),$$

and

$$L = \sqrt{\{(p/\cos\theta)^2 - pd\cos2\theta/\cos\theta + (d/2)^2\}} \ldots (2).$$

The calculation unit (22) calculates the movement distance by p/cos$\theta$, where

p represents the amount of change in the measurement distance, and
$\theta$ represents the illumination angle.

The measuring apparatus (1) according to claim 3,
wherein the calculation unit (22) calculates the movement distance and the moving direction based on:

an angle $\delta$ satisfies relational expressions (i) and (ii) below,

$$\tan\delta = (p\sin\theta/\cos\theta + d\sin\theta/2)/(-p + d\cos\theta/2) \ldots (i),$$

and

$$L = \sqrt{\{(p/\cos\theta)2 - pd\cos2\theta/\cos\theta + (d/2)2\}} \ldots (ii),$$

where

p represents the amount of change in the measurement distance,
$\theta$ represents the illumination angle,
d represents a depth of field of the light receiving unit (12),
L represents the movement distance of the light receiving unit (12), and
$\delta$ represents an angle formed by the perpendicular to the virtual plane and a direction in which the light receiving unit (12) is moved by the driver (16).

With the measuring apparatus 1 according to the present embodiment, when the imaging surface of the light receiving unit 12 is within the range of the depth of field, an image of the measurement object can be satisfactorily captured. Thus, the movement distance of the light receiving unit 12 corresponding to a change in the measurement distance to the measurement object can be reduced.

The embodiments have been described above; however, the present disclosure is not limited to the above-described embodiments and can be modified and improved in various ways within the scope of the disclosure.

Aspects of the present disclosure are as follows, for example.

According to Aspect 1, a measuring apparatus that measures a measurement object being conveyed in a conveyance direction includes an illumination unit fixedly installed to illuminate the measurement object; a light receiving unit that receives light specularly reflected from the measurement object illuminated by the illumination unit; a distance measuring unit that measures a measurement distance that is a distance from a side of the illumination unit facing the measurement object to the measurement object; a calculation unit that calculates a movement distance that is a distance by which the light receiving unit is moved, based on an illumination angle and an amount of change in the measurement distance; and a driver that causes the light receiving unit to be moved by the calculated movement distance. The illumination angle is an angle formed between the optical axis of light regularly reflected from the measurement object and a perpendicular line to a virtual plane. The virtual plane extends in the conveyance direction and includes a position illuminated by the illumination unit, on a surface of the measurement object.

According to Aspect 2, in the measuring apparatus of Aspect 1, the driver causes the light receiving unit to be moved by the movement distance in a direction in which the position illuminated by the illumination unit has changed and in a direction parallel to an optical axis of light incident on the measurement object.

According to Aspect 3, in the measuring apparatus of Aspect 1 or Aspect 2, the distance measuring unit measures a distance from a surface of a housing facing the measurement object to the measurement object using a distance measuring sensor, the housing including the illumination unit and the light receiving unit; and the measurement distance is a length of a perpendicular from the surface of the housing facing the measurement object to a virtual plane extending in the conveyance direction and including the position, illuminated by the illumination unit, on a surface of the measurement object illuminated by the illumination unit.

According to Aspect 4, in the measuring apparatus of Aspect 3, the movement distance of the light receiving unit calculated by the calculation unit is $p/\cos\theta$, where p represents the amount of change in the measurement distance, and $\theta$ represents the illumination angle.

According to Aspect 5, in the measuring apparatus of Aspect 3, the movement distance L and the angle $\delta$ satisfy relational expressions (i) and (ii) below,

$$\tan\delta = (p\sin\theta/\cos\theta + d\sin\theta/2)/(-p + d\cos\theta/2) \ldots \text{(i)},$$

and

$$L = \sqrt{\{(p/\cos\theta)^2 - pd\cos2\theta/\cos\theta + (d/2)^2\}} \ldots \text{(ii)},$$

where p represents the amount of change in the measurement distance, $\theta$ represents the illumination angle d represents a depth of field of the light receiving unit, L represents the movement distance of the light receiving unit, and $\delta$ represents an angle formed by the perpendicular to the virtual plane and a direction in which the light receiving unit moves.

According to Aspect 6, the measuring apparatus of any one of Aspect 1 to Aspect 5, further includes an information acquisition unit that acquires width information including information relating to a width of the measurement object in a direction perpendicular to the conveyance direction. The calculation unit calculates the movement distance of the light receiving unit based on the amount of change in the measurement distance and the width information.

According to Aspect 7, in the measuring apparatus of Aspect 6, the calculation unit calculates the movement distance using, as a reference position, a position of the light receiving unit in a case where the measurement distance is an intermediate distance between a distance when the width of the measurement object is maximum and a distance when the width of the measurement object is minimum, and the driver causes the light receiving unit to be moved by the movement distance from the reference position as a start point.

According to Aspect 8, the measuring apparatus of any one of Aspect 1 to Aspect 7, further includes a defect detection unit that detects a defect of the measurement object based on the light specularly reflected from the measurement object and received by the light receiving unit.

According to Aspect 9, in the measuring apparatus of any one of Aspect 1 to Aspect 8, the measurement object includes a vehicle body.

According to Aspect 10, a measuring method executed by a measuring apparatus that measures a measurement object being conveyed in a conveyance direction includes illuminating the measurement object; receiving light specularly reflected from the illuminated measurement object; measuring a measurement distance that is a distance from a side of an illumination unit facing the measurement object to the measurement object, the illumination unit illuminating the measurement object; calculating a movement distance that is a distance by which a light receiving unit is moved based on an illumination unit and an amount of change in the measurement distance, the light receiving unit receiving the light specularly reflected from the measurement object; and causing the light receiving unit to be moved by the calculated movement distance. The illumination angle is an angle formed between the optical axis of light regularly reflected from the measurement object and a perpendicular line to a virtual plane. The virtual plane extends in the conveyance direction and includes a position illuminated by the illumination unit, on a surface of the measurement object.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A measuring apparatus (1) comprising:
   a housing (10);

   an illumination unit (11) fixed to the housing (10), the illumination unit (11) to:

   emit illumination light, in an optical-axis direction, to a first face of an object conveyed in a conveyance direction; and
   illuminate, the first face of the object at a first position and at an illumination angle, with the illumination light;

   a light receiving unit (12) configured to receive reflection light, specularly reflected from the first face of the object illuminated by the illumination unit (11);
   an actuator (16) to move the light receiving unit; and
   a distance measuring unit (21) configured to control the illumination unit (11) and the light receiving unit (12) to measure a measurement distance, in a perpendicular direction perpendicular to the first face, between:

   the first face of the object; and
   a second face of the housing facing the first face of the object;

   a calculation unit (22) configured to determine a moving distance and a moving direction of the light receiving unit based on:

   the illumination angle between an optical axis of the reflection light and a perpendicular line in the perpendicular direction; and
   an amount of change in the measurement distance in the perpendicular direction; and

   a control unit (23) configured to drive the actuator to move the light receiving unit (12) by the moving distance in the moving direction.

2. The measuring apparatus (1) according to claim 1, wherein the driver (16) is configured to:
   control the actuator to move the light receiving unit (12) by the movement distance in the moving direction parallel to the optical-axis direction of the illumination light.

3. The measuring apparatus (1) according to claim 1 or 2, further comprising:

   a distance measuring sensor (7) to acquire measurement distance data; and
   a housing containing the illumination unit (11) and the light receiving unit (12),

   wherein the distance measuring unit (21) is further configured to:

   measure a distance between the first surface of the measurement object and a third surface of the housing (50) facing the first surface of the measurement object, based on the measurement distance data acquired by the distance measuring sensor (7), and
   the measurement distance is a length of a perpendicular line from the third surface of the housing to the virtual plane.

4. The measuring apparatus (1) according to claim 3,

 wherein the calculation unit (22) is further configured to calculate the movement distance by p/cosθ, where

 p represents the amount of change in the measurement distance, and
 θ represents the illumination angle.

5. The measuring apparatus (1) according to claim 3,
 wherein the calculation unit (22) calculates the movement distance and the moving direction based on:

 an angle δ satisfies relational expressions (i) and (ii) below,

$$\tan\delta = (p\sin\theta/\cos\theta + d\sin\theta/2)/(-p + d\cos\theta/2) \ ... \ (i),$$

 and

$$L = \sqrt{\{(p/\cos\theta)2 - pd\cos2\theta/\cos\theta + (d/2)2\}} \ ... \ (ii),$$

 where

 p represents the amount of change in the measurement distance,
 θ represents the illumination angle,
 d represents a depth of field of the light receiving unit (12),
 L represents the movement distance of the light receiving unit (12), and
 δ represents an angle formed by the perpendicular to the virtual plane and a direction in which the light receiving unit (12) is moved by the driver (16).

6. The measuring apparatus (1) according to any one of claims 1 to 5, further comprising an information acquisition unit (24) configured to acquire width information including information relating to a width of the object in a direction perpendicular to the conveyance direction,
 wherein the calculation unit (22) is configured to calculate the movement distance of the light receiving unit (12) based on the amount of change in the measurement distance and the width information.

7. The measuring apparatus (1) according to claim 6,
 wherein the calculation unit (22) is configured to calculate the movement distance using, as a reference position, a position of the light receiving unit (12) in a case where the measurement distance is an intermediate distance between:

 a distance when the width of the object is maximum; and
 a distance when the width of the object is minimum, and
 the driver (16) is configured to cause the light receiving unit (12) to move by the movement distance from the reference position as a start point.

8. The measuring apparatus (1) according to any one of claims 1 to 7, further comprising a defect detection unit (25) configured to detect a defect of the object based on the light specularly reflected from the first face of the object and received by the light receiving unit (12).

9. The measuring apparatus (1) according to any one of claims 1 to 8, wherein the object includes a vehicle body.

10. A measuring method comprising:

 emitting (S101), from an illumination unit fixed to a housing, illumination light, in an optical-axis direction, to a first face of an object conveyed in a conveyance direction; and
 illuminating, the first face of the object at a first position and at an illumination angle, with the illumination light;
 receiving (S102), by a light receiving unit, reflection light, specularly reflected from the first face of the object illuminated by the illumination unit;

controlling (S103) the illumination unit and the light receiving unit to measure a measurement distance, in a perpendicular direction perpendicular to the first face, between:

the first face of the object; and
a second face of the housing facing the first face of the object;

determining (S104) a movement distance and a moving direction of the light receiving unit based on:

the illumination angle between an optical axis of the reflection light and a perpendicular line in the perpendicular direction; and
an amount of change in the measurement distance in the perpendicular direction; and

driving (S105) an actuator to move the light receiving unit by the movement distance in the moving direction.

# FIG. 1

EP 4 760 200 A1

# FIG. 2

OPTICAL SECTION 10

DRIVER 16

ILLUMINA-TION UNIT 11

LIGHT RECEIVING UNIT 12

ILLUMINATION DIRECTION

LIGHT RECEIVING DIRECTION

2P

# FIG. 3A

CONVEYANCE
DIRECTION

10

3

2(2P)

# FIG. 3B

10

2

2P     3

# FIG. 4A

# FIG. 4B

# FIG. 4C

# FIG. 5A

13

13r 13g 13b 13r 13g 13b 13r 13g 13b

Fb

13R 13G 13B 13R 13G 13B 13R 13G 13B

Fa

# FIG. 5B

I

Iar  Iag  Iab

Fa

# FIG. 5C

I

$(Ibr \fallingdotseq Ibg \fallingdotseq Ibb)$

Fb

# FIG. 5D

15

$2\pi$

Fb

Fa

# FIG. 6

20

| 101 | 102 | 103 |
|-----|-----|-----|
| CPU | ROM | RAM |

109

| 104 | 105 |
|-----|-----|
| HDD | INPUT-OUTPUT I/F |

# FIG. 7

MEASURING APPARATUS — 1

ILLUMINATION UNIT — 11

LIGHT RECEIVING UNIT — 12

DRIVER — 16

DISTANCE MEASURING UNIT — 21

CALCULATION UNIT — 22

CONTROL UNIT — 23

DATABASE — 26

INFORMATION ACQUISITION UNIT — 24

DEFECT DETECTION UNIT — 25

# FIG. 8A

## COMPARATIVE EXAMPLE

# FIG. 8B

## COMPARATIVE EXAMPLE

EP 4 760 200 A1

# FIG. 9A

# FIG. 9B

# FIG. 10

# FIG. 11

# FIG. 12

# FIG. 13

```
( START )
         │
         ▼                                          ⌒S101
┌──────────────────────────────────────────────────┐
│     ILLUMINATE SURFACE OF MEASUREMENT OBJECT       │
└──────────────────────────────────────────────────┘
         │
         ▼                                          ⌒S102
┌──────────────────────────────────────────────────┐
│        RECEIVE LIGHT SPECULARLY REFLECTED          │
│       FROM SURFACE OF MEASUREMENT OBJECT           │
└──────────────────────────────────────────────────┘
         │
         ▼                                          ⌒S103
┌──────────────────────────────────────────────────┐
│  MEASURE MEASUREMENT DISTANCE TO MEASUREMENT OBJECT│
└──────────────────────────────────────────────────┘
         │
         ▼                                          ⌒S104
┌──────────────────────────────────────────────────┐
│   CALCULATE MOVEMENT DISTANCE OF LIGHT RECEIVING UNIT│
└──────────────────────────────────────────────────┘
         │
         ▼                                          ⌒S105
┌──────────────────────────────────────────────────┐
│            CAUSE LIGHT RECEIVING UNIT BY           │
│           CALCULATED MOVEMENT DISTANCE             │
└──────────────────────────────────────────────────┘
         │
         ▼                                          ⌒S106
┌──────────────────────────────────────────────────┐
│        GENERATE IMAGE INFORMATION BASED            │
│          ON SPECULARLY REFLECTED LIGHT             │
└──────────────────────────────────────────────────┘
         │
         ▼                                          ⌒S107
┌──────────────────────────────────────────────────┐
│          CALCULATE CHARACTERISTIC VALUE            │
│            BASED ON IMAGE INFORMATION              │
└──────────────────────────────────────────────────┘
         │
         ▼                                          ⌒S108
┌──────────────────────────────────────────────────┐
│       DETECT DEFECT OF SURFACE OF MEASUREMENT      │
│   OBJECT IN ACCORDANCE WITH CHARACTERISTIC VALUE   │
└──────────────────────────────────────────────────┘
         │
         ▼
      ( END )
```

# FIG. 14

```
                    ┌──────────────┐
                    │    START     │
                    └──────┬───────┘
                           │          ⤳S201
        ┌──────────────────▼──────────────────┐
        │          ACQUIRE IMAGE              │
        └──────────────────┬──────────────────┘
                           │          ⤳S202
        ┌──────────────────▼──────────────────┐
        │      DECOMPOSE INTO RGB COLORS      │
        └──────────────────┬──────────────────┘
                           │          ⤳S203
        ┌──────────────────▼──────────────────┐
        │     CALCULATE PHASE INFORMATION     │
        └──────────────────┬──────────────────┘
                           │          ⤳S204
        ┌──────────────────▼──────────────────┐
        │       EDGE EXTRACTION PROCESS       │
        └──────────────────┬──────────────────┘
                           │          ⤳S205
        ┌──────────────────▼──────────────────┐
        │      EXTRACT POTENTIAL DEFECT       │
        └──────────────────┬──────────────────┘
                           │          ⤳S206
        ┌──────────────────▼──────────────────┐
        │    CALCULATE CHARACTERISTIC VALUE   │
        └──────────────────┬──────────────────┘
                           │          ⤳S207
        ┌──────────────────▼──────────────────┐
        │           DETECT DEFECT             │
        └──────────────────┬──────────────────┘
                           │
                    ┌──────▼───────┐
                    │     END      │
                    └──────────────┘
```

FIG. 15A

FIG. 15B

EP 4 760 200 A1

Europäisches
Patentamt
European
Patent Office
Office européen
des brevets

**EUROPEAN SEARCH REPORT**

Application Number

EP 25 21 2529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2024 134409 A (RICOH CO LTD) 3 October 2024 (2024-10-03) | 1-5,8-10 | INV. G01B11/02 |
| A | * paragraphs [0001], [0011], [0017], [0018], [0028], [0033], [0037] – [0037], [0041]; figures 1,4,5 * * paragraphs [0063] - [0067], [0088] * ----- | 6,7 | G01B11/25 G01N21/88 |
| A | US 2017/148102 A1 (FRANKE RENÉ [DE] ET AL) 25 May 2017 (2017-05-25) * paragraph [0122] * ----- | 6,7 | |

TECHNICAL FIELDS
SEARCHED (IPC)

G01B
G01N

The present search report has been drawn up for all claims

| Place of search | Date of completion of the search | Examiner |
|---|---|---|
| Munich | 17 March 2026 | Biedermann, Benjamin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

33

## ANNEX TO THE EUROPEAN SEARCH REPORT
## ON EUROPEAN PATENT APPLICATION NO.

EP 25 21 2529

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | | | Publication date | Patent family member(s) | | Publication date |
|---|---|---|---|---|---|---|
| JP | 2024134409 | A | 03-10-2024 | NONE | | |
| US | 2017148102 | A1 | 25-05-2017 | US | 2017147990 A1 | 25-05-2017 |
| | | | | US | 2017147991 A1 | 25-05-2017 |
| | | | | US | 2017148101 A1 | 25-05-2017 |
| | | | | US | 2017148102 A1 | 25-05-2017 |
| | | | | WO | 2017091308 A1 | 01-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024134409 A